(19) **Europäisches Patentamt / European Patent Office / Office européen des brevets**

(11) **EP 2 775 092 B1**

(12) **FASCICULE DE BREVET EUROPEEN**

(45) Date de publication et mention
de la délivrance du brevet:
**02.09.2015 Bulletin 2015/36**

(51) Int Cl.:
***E21B 43/16*** *(2006.01)*

(21) Numéro de dépôt: **14305272.8**

(22) Date de dépôt: **26.02.2014**

(54) **Procédé d'exploitation d'un gisement d'hydrocarbures contenant des composés organo-soufrés au moyen d'un modèle thermo-cinétique et d'une simulation de réservoir compositionnelle**

Verfahren zum Betreiben eines Kohlenwasserstoffreservoir, welches Organoschwefelverbindungen enthält, mittels eines thermo-kinetischen Modells und einer Simulation der Zusammensetzung des Reservoirs

A method of operating a hydrocarbon reservoir containing organosulfur compounds by means of a thermo-kinetic model, and of a simulation of composition of the reservoir

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2013 FR 1352091**

(43) Date de publication de la demande:
**10.09.2014 Bulletin 2014/37**

(73) Titulaire: **IFP Energies nouvelles
92852 Rueil-Malmaison Cedex (FR)**

(72) Inventeurs:
• **Barroux, Claire
92370 Chaville (FR)**
• **Lamoureux-Var, Violaine
78400 Chatou (FR)**

(56) Documents cités:
**WO-A1-2013/021125    FR-A1- 2 892 817**

• **LAMOUREUX-VAR V ET AL: "H2S ARTIFICIAL FORMATION AS A RESULT OF STEAM INJECTION FOR EOR. A COMPOSITIONAL KINETIC APPROACH", 1 janvier 2005 (2005-01-01), SPE INTERNATIONAL THERMAL OPERATIONS AND HEAVY OIL SYMPOSIUM ANDINTERNATIONAL HORIZONTAL WELL TECHNOLOGY CONFERENCE, XX, XX, PAGE(S) 1 - 04, XP008067087, * le document en entier ***

**Description**

L'invention concerne le domaine de l'exploration pétrolière, et plus particulièrement le domaine de l'exploitation d'un gisement d'hydrocarbures contenant des composés organo-soufrés, par un procédé thermique tel qu'un procédé d'injection de vapeur.

Lors de l'exploitation de réservoirs de bruts lourds par un procédé d'injection de vapeur, il se produit un phénomène d'aquathermolyse, qui génère de l'hydrogène sulfuré ($H_2S$). En effet ce type de réservoir contient des teneurs en soufre souvent élevées. Les procédés thermiques permettent, par apport de calories et augmentation de la température, de réduire la viscosité des bruts lourds et ainsi de les rendre productibles.

L'aquathermolyse est définie comme un ensemble de réactions physico-chimiques entre une roche imprégnée d'huile brute (ou de bitume) et de la vapeur d'eau, à des températures entre 200°C et 300°C. Une définition est donnée dans le document suivant : Hyne J.B. et coll., 1984, "Aquathermolysis of heavy oils", 2nd Int. Conf., The Future of Heavy Crude and Tar Sands, McGraw Hill, New York, Chapter 45, p. 404-411.

L'hydrogène sulfuré est un gaz à la fois extrêmement corrosif et très toxique, voire létal au delà d'une certaine concentration. Aussi, prévoir la concentration en $H_2S$ du gaz produit lors de la récupération assistée par injection de vapeur aide, d'une part, à réduire les coûts de production en adaptant les matériaux de complétion et les dispositifs de traitement de gaz, en optimisant les conditions d'opérations, et d'autre part, à éviter des émissions dangereuses pour l'homme et l'environnement.

Un problème technique est la prédiction de la quantité d'$H_2S$ générée selon la nature du brut, les conditions de réservoir et les conditions d'injection de vapeur. Si l'on veut prédire le risque de production d'$H_2S$ grâce à un modèle de réservoir (utilisé par les simulateurs d'écoulements), un modèle cinétique de genèse de l'hydrogène sulfuré est obligatoire.

On connaît de la demande de brevet FR2892817 une méthode permettant de construire un modèle cinétique pour estimer la masse d'hydrogène sulfuré produite par aquathermolyse d'une roche contenant de l'huile brute, en décrivant l'évolution de la répartition du soufre dans les fractions de l'huile et la fraction des insolubles, une revue exhaustive de l'état de l'art antérieur à cette publication étant fournie dans ce document. La méthode proposée fournit un schéma réactionnel élémentaire, sur l'élément soufre, prédictif, obtenu par bilan matière sur l'élément soufre réparti au sein de fractions telles que des résines ou des fractions asphalténiques, mais non utilisable en l'état dans des simulations de réservoir qui utilisent des informations sur des constituants de type moléculaire, et non des informations sur des éléments atomiques.

On connaît également d'autres modèles thermo-cinétiques permettant d'estimer la masse d'hydrogène sulfuré produite par aquathermolyse d'une roche contenant de l'huile brute, mais ces modèles rencontrent au moins l'un des problèmes suivants :

- leur complexité ne permet pas de les mettre en oeuvre dans des simulateurs de réservoirs pour réaliser des simulations de réservoir ;

- la cohérence entre les paramètres thermodynamiques des constituants et le schéma réactif (en particulier la stoechiométrie des réactions) n'est pas assurée ;

- les coefficients stoechiométriques des réactions sont exprimés en fractions massiques et non en fractions molaires ;

- modèles pas suffisamment précis (pas de prise en compte des résines dans la production de l'hydrogène sulfuré, aucune description de l'évolution de la répartition du soufre dans les différentes fractions, ...) ;

- modèles sans caractérisation thermodynamique des pseudo-constituants ;

- modèles non prédictif (il faut d'abord produire avant de pouvoir caler les modèles).

L'objet de l'invention concerne un procédé d'exploitation d'un gisement d'hydrocarbures contenant des composés organo-soufrés au moyen d'un modèle thermo-cinétique et d'une simulation de réservoir compositionnelle. Le modèle thermo-cinétique construit lors du procédé selon l'invention s'affranchit des problèmes des modèles antérieurs.

**LE PROCEDE SELON L'INVENTION**

De façon générale, l'invention concerne un procédé pour déterminer une quantité d'hydrogène sulfuré produite par un phénomène d'aquathermolyse induit par un procédé thermique, tel qu'une injection de vapeur, appliqué à un gisement souterrain d'hydrocarbures contenant des composés organo-soufrés. Le procédé comporte les étapes suivantes :

- on décrit les hydrocarbures au moyen d'une représentation compositionnelle utilisant l'$H_2S$ et quatre fractions : les saturés, les aromatiques, les résines et les asphaltènes ;

- on construit un modèle cinétique sur la base de ladite représentation compositionnelle, à partir d'un modèle élémentaire obtenu par bilan de matière sur l'élément soufre réparti au sein desdites fractions ;

- on construit un modèle thermodynamique sur la base de ladite représentation compositionnelle ;

- on détermine la quantité d'hydrogène sulfuré ($H_2S$) produite en réalisant une simulation de réservoir compositionnelle au moyen d'un simulateur thermique compositionnel et réactif, ledit simulateur mettant en oeuvre ledit modèle cinétique et ledit modèle thermodynamique.

Selon l'invention, on peut construire le modèle cinétique en considérant que les réactants des réactions de génération d'$H_2S$ appartiennent aux classes des résines et des asphaltènes, et en considérant que les produits desdites réactions appartiennent à l'ensemble $H_2S$, saturés, aromatiques et un pseudo-constituants de type solide tel que le coke.

Selon l'invention, le modèle cinétique peut comporter Nt constituants et Nr réactions, et l'on construit alors une matrice Nr x Nt de coefficients stoechiométriques des différentes réactions ; lesdits coefficients stoechiométriques étant déterminés à partir d'un schéma réactionnel élémentaire obtenu par bilan matière sur l'élément soufre.

On peut ajuster le modèle cinétique au moyen de simulation d'expériences d'aquathermolyse ou au moyen de simulation du comportement d'un champ soumis à un procédé thermique, champ pour lequel des mesures de production permettant de calculer une production d'$H_2S$ sont disponibles. Le modèle cinétique peut être ajusté, en ajustant des constantes de temps pour restituer une décroissance des résines et des asphaltènes en fonction du temps, ou en ajustant la stoechiométrie relative entre les saturés et les aromatiques, ou en ajustant la stoechiométrie relative entre $H_2S$ et un pseudo-constituant de type solide tel que le coke.

Selon un mode de réalisation, la représentation compositionnelle comporte :

- des pseudo-constituants pour représenter des phases fluides, et des phases appelées à se fluidifier, notamment par effet de température ;

- au moins un pseudo-constituant de type solide (COK), tel que du coke ;

- au moins un constituant représentant l'eau.

Selon l'invention, la fraction des saturés peut représenter l'unique fraction des composés non soufrés.

L'invention concerne également un procédé d'exploitation d'un gisement souterrain d'hydrocarbures contenant des composés organo-soufrés, dans lequel :

i. on détermine une quantité d'hydrogène sulfuré ($H_2S$) produite par un phénomène d'aquathermolyse induit par un procédé thermique tel qu'une injection de vapeur dans ledit gisement, au moyen du procédé selon l'invention ;

ii. on détermine des conditions d'exploitation dudit gisement en fonction de ladite quantité d'hydrogène sulfuré ;

iii. on produit lesdits hydrocarbures en appliquant lesdites conditions d'exploitation.

On peut comparer ladite quantité d'hydrogène sulfuré à une quantité passée mesurée, et l'on ajuste des paramètres dudit modèle cinétique et/ou dudit modèle thermique.

On peut prédire une production d'$H_2S$ par ledit gisement à partir desdits modèles ajustés.

On peut déterminer les conditions d'exploitation en adaptant des matériaux de complétion et/ou des dispositifs de traitement de gaz.

On peut modifier les conditions d'exploitation en adaptant les conditions d'injection de la vapeur.

Enfin, selon l'invention on peut comparer ladite quantité d'hydrogène sulfuré à une teneur maximale légale, et on détermine les conditions d'exploitation de façon à maintenir une production d'hydrogène sulfuré inférieure à ladite teneur maximale légale.

**PRESENTATION SOMMAIRE DES FIGURES**

- Figure 1 - Courbe de viscosité de l'huile morte ($10^{-2}$ Poise) en fonction de la température (°C)

- Figure 2.1 - Résultats des simulations de type réacteur (lignes) par rapport aux résultats expérimentaux (marques). Côté gauche : fractions massiques de composant de l'huile produite en fonction du temps (heures) ; côté droit : masse de $H_2S$ produit rapporté à la masse produite totale de pseudo-constituants SAT, ARO, RES, ASP en fonction du temps (heures). Résultats obtenus (a) avec la stoechiométrie (1) et les paramètres cinétiques (1), (b) avec la stoechiométrie (1) et les paramètres cinétiques (2).

- Figure 2.2 - Résultats des simulations de type réacteur (lignes) par rapport aux résultats expérimentaux (marques). Côté gauche : fractions massiques de composant de l'huile produite en fonction du temps (heures) ; côté droit : masse de $H_2S$ produit rapporté à la masse produite totale de pseudo-constituants SAT, ARO, RES, ASP en fonction du temps (heures). Résultats obtenus (a) avec la stoechiométrie (2) et les paramètres cinétiques (2), (b) avec la stoechiométrie (3) et les paramètres cinétiques (3).

- Figure 3 - Courbes de perméabilités relatives (kr) utilisées dans les simulations : à gauche kr eau-huile en fonction de la saturation en eau (en fraction du volume de pores), à droite kr gaz-huile en fonction de la saturation en gaz (en fraction du volume de pores).

- Figure 4.1 - Production d'huile cumulée (millions de $m^3$ en surface, axe de gauche), rapport des quantités cumulées vapeur injectée/huile produite (équivalent $m^3$ d'eau/$m^3$ d'huile, axe de droite), en fonction du temps (années).

- Figure 4.2 - Débit d'huile produite en conditions de surface ($m^3$/jour, axe de gauche) et température en fond du puits injecteur (°C, axe de droite), en fonction du temps (années).

- Figure 5 - Rapport des litres d'$H_2S$ produits par $m^3$ d'huile produite en fonction du temps (années) : résultats simulés (marques et traits noirs) avec les stoechiométries (2) et (3) et données champ (marques en rose)

- Figure 6 - Fraction molaire en phase gazeuse après 4 années de production ; elle est non définie dans les zone en grisé et en bleu, zones où il n'y a pas de phase gazeuse.

**DESCRIPTION DETAILLEE DU PROCEDE SELON L'INVENTION**

Les mots "hydrocarbure" et "hydrocarboné" peuvent être utilisés ici, comme souvent en ingénierie de réservoir, au sens large : ils désignent à la fois les hydrocarbures au sens strict (saturés, aromatiques) et les composés organo-soufrés.

Les mélanges hydrocarbonés sont représentés, en simulation de réservoir, comme des mélanges de "constituants" et/ou "pseudo-constituants". Le mot "constituant" désigne d'abord des espèces moléculaires comme l'hydrogène sulfuré ($H_2S$), le méthane,... Le mot "pseudo-constituant" désigne un mélange d'espèces moléculaires assimilable à une espèce moléculaire unique pour le problème traité.

Dans le texte qui suit, les mots "composé", "composant", "pseudo-composé", "pseudo-composant", "pseudo-constituant", "pseudo-constituant", "constituant" désignent des espèces assimilables à des espèces moléculaires. Le terme "constituant" n'est donc ici pas forcément réservé à des "corps purs moléculaires" comme $H_2S$, $CH_4$,...

Le mot élément, utilisé en dehors d'un contexte mathématique, est réservé à une espèce élémentaire atomique comme le soufre S, le carbone C, l'hydrogène H, ...

La présente invention concerne un procédé, et son utilisation, pour modéliser la production d'hydrogène sulfuré ($H_2S$) induite par des réactions se produisant dans un gisement souterrain d'hydrocarbures lorsque ce gisement est soumis à un procédé de récupération thermique, en particulier à un procédé d'injection de vapeur, les réactions étant alors dues à un phénomène d'aquathermolyse.

Le procédé selon l'invention comporte les étapes suivantes :

i. on détermine la quantité d'hydrogène sulfuré ($H_2S$) produite en appliquant les étapes suivantes :

- on décrit les hydrocarbures au moyen d'une représentation compositionnelle utilisant l'$H_2S$ et quatre fractions, les saturés, les aromatiques, les résines et les asphaltènes ;

- on construit un modèle thermo-cinétique sur la base de ladite représentation compositionnelle,

- on détermine la quantité d'hydrogène sulfuré (H$_2$S) produite en réalisant une simulation de réservoir compositionnelle au moyen du modèle ;

ii. on détermine des conditions d'exploitation dudit gisement en fonction de ladite quantité d'hydrogène sulfuré ;
iii. on produit lesdits hydrocarbures en appliquant lesdites conditions d'exploitation.

## 1. Détermination d'une quantité d'hydrogène sulfuré (H$_2$S) produite

Le but de cette étape est de permettre d'estimer, par simulation de réservoir compositionnelle, la quantité d'hydrogène sulfuré (H$_2$S) qui serait produite si l'on utilisait un procédé thermique pour exploiter un réservoir souterrain imprégné d'huile ou de bitume contenant des composés organo-soufrés.

En anticipant la production d'H$_2$S avant même sa production, il est possible d'optimiser le procédé d'exploitation du réservoir.

Pour estimer cette production d'H$_2$S, on réalise une simulation de réservoir compositionnelle qui utilise deux outils logiciels. Le premier est un modèle thermo-cinétique de production d'hydrogène sulfuré (H$_2$S) produite lors de l'exploitation, et le second outil est un simulateur réservoir simulateur thermique, compositionnel et réactif.

La première étape consiste donc à construire le modèle thermo-cinétique.

## 1.1 Construction d'un modèle thermo-cinétique

L'huile brute est supposée essentiellement constituée de Cn+, les fractions composant le Cn- pouvant être présentes, mais leur prise en compte dans la modélisation n'étant pas indispensable. Pour un bitume, le nombre de carbones n est typiquement égal à 14.

Une caractérisation par classes de composés chimiques commune dans l'industrie est la caractérisation S.A.R.A., décrite par exemple dans le document suivant :

F.Leyssale, 1991, "Étude de la pyrolyse d'alkylpolyaromatiques appliquée aux procédés de conversion des produits lourds du pétrole. Influence du noyau aromatique sur le comportement thermique", Thèse de l'Université Paris VI, Réf IFO n° 39 363.

Elle consiste à décrire l'huile brute en quatre fractions : les saturés, les aromatiques, les résines et les asphaltènes, et à fournir la fraction massique de chacune de ces fractions dans l'huile brute. On suppose qu'une information de type S.A.RA. est disponible pour le cas d'application de la méthode. On suppose de plus connue (mesurée ou estimée) la teneur massique en soufre atomique dans chaque fraction par analyse élémentaire, technique bien connue de l'homme du métier.

La méthode selon l'invention fournit un modèle thermo-cinétique permettant en utilisant un logiciel de simulation de réservoir (étape 1.2) de prédire en fonction du temps la production d'H$_2$S par réactions d'aquathermolyse dans un réservoir souterrain d'hydrocarbures lourds soumis à un procédé thermique d'injection de vapeur, ou à un procédé susceptible de vaporiser l'eau présente naturellement dans le réservoir. La simulation de réservoir utilisée repose sur une représentation compositionnelle des hydrocarbures présents dans le réservoir, cette représentation compositionnelle utilisant l'H$_2$S, le cas échéant un ou plusieurs constituants ou pseudo-constituants pour représenter la fraction Cn-, et, pour représenter la fraction Cn+ :

- un pseudo-constituant représentant la classe des composés non soufrés ; ce pseudo-constituant est assimilé à la classe des saturés, et est désigné par SAT,

- au moins un pseudo-constituant représentant la classe des aromatiques ; ce pseudo-constituant est désigné par ARO,

- un ou plusieurs pseudo-constituant(s) représentant la classe des résines ; ces pseudo-composants sont désignés par RES$_1$, RES$_2$, .., RES$_p$,

- un ou plusieurs pseudo-constituant(s) représentant la classe asphalténique ; ces pseudo-composants sont désignés par ASP$_1$, ASP$_2$, .., ASP$_q$.

En plus de ces constituants ou pseudo-constituants, au nombre de Nc, qui permettent de simuler les phases fluides, ou appelées à se fluidifier, notamment par effet de température, sont représentés :

- un ou plusieurs pseudo-constituants de type solide comme du coke désignés par $COK_1$, $COK_2$, .., $COK_s$, ces pseudo-constituants solides étant au nombre de Ns ;

- au moins un constituant représentant l'eau, l'eau pure ($H_2O$) étant utile notamment pour la modélisation de la vapeur d'eau. L'eau liquide peut, elle, être salée, comme le sont en général les eaux de gisement, et est représentée autrement qu'avec $H_2O$ seulement.

Chacun des pseudo-constituants soufrés {ARO, $COK_1$, $COK_2$, .., $COK_s$, $RES_1$, $RES_2$, .., $RES_p$, $ASP_1$, $ASP_2$, .., $ASP_q$} est assimilé à une macromolécule de formule générique $R_{nR}S_{nS}$ où S désigne l'atome Soufre de masse Ms et R un ensemble d'atomes considéré comme un pseudo-élément atomique unique de masse $M_R$, $n_S$, $n_R$ désignant respectivement les nombres d'atomes S et de pseudo-éléments R dans la macromolécule de masse molaire *MW*. Si $n_R$ est pris égal à 1, la formule générique de chaque macromolécule est $RS_{nS}$. La relation entre *MW*, $n_S$, $M_R$ s'écrit alors :

$$MW = n_S M_S + M_R \qquad (1)$$

La masse atomique du soufre $M_S$ peut être prise égale à 32.065, valeur de la masse atomique standard selon l'organisme N.I.S.T. (National Institute of Standards and Technology, *http://www.nist.gov/pml/data/comp.cfm*). $M_R$ est ici introduit simplement pour faciliter la présentation.

La teneur massique en soufre atomique $w_S$ au sein de la macromolécule, supposée connue, et qui est une quantité réelle définie positive, s'écrit :

$$w_S = \frac{n_S M_S}{MW} \qquad (2)$$

On suppose connue (mesurée ou estimée par une méthode connue en soi) la masse molaire MW. Le nombre d'atomes de soufre dans la macromolécule se déduit simplement par

$$n_S = \frac{w_S MW}{M_S} \qquad (3)$$

Modèle réactif a priori selon l'invention

Les réactants considérés dans les réactions utilisées pour la génération d'$H_2S$ appartiennent aux classes des résines et des asphaltènes, donc à l'ensemble des pseudo-constituants {$RES_1$, $RES_2$, .., $RES_p$, $ASP_1$, $ASP_2$, .., $ASP_q$}. Les produits de réactions appartiennent typiquement à l'ensemble {$H_2S$, SAT, ARO, $COK_1$, $COK_2$, .., $COK_s$}. Le système réactionnel est un ensemble à *Nr = p+q* réactions qui s'écrit :

$$\left| \begin{array}{l} RES_j \xrightarrow{K_{RES_j}(T)} a_{j1} H_2S + a_{j2} SAT + a_{j3} ARO + a_{j4} COK_1 + \ldots , \quad j=1,..,p \\ ASP_j \xrightarrow{K_{ASP_j}(T)} b_{j1} H_2S + b_{j2} SAT + b_{j3} ARO + b_{j4} COK_1 + \ldots , \quad j=1,..,q \end{array} \right| , \forall\, t \geq 0 \quad (4)$$

avec :

$T$ : la température

$t$ : le temps

$a_{j1}$, $a_{j2}$, $a_{jn}$ : des coefficients stoechiométriques, définis de telle façon que les réactions soient équilibrées en masse

$b_{j1}$, $b_{j2}$, $b_{jn}$ : des coefficients stoechiométriques, définis de telle façon que les réactions soient équilibrées en masse

$K_{RESj}(T)$, $K_{ASPj}(T)$ : des constantes de temps par réaction $j$ : $1 \leq j \leq p$ ou $1 \leq j \leq q$

Ces coefficients stoechiométriques peuvent être mis sous la forme d'une matrice $[\alpha_{rk}]$ dont le nombre de lignes est égal au nombre de réactions Nr et dont le nombre de colonnes est égal à Nt = Ns + Nc. On adopte un formalisme unifié pour les Nt constituants et pseudo-constituants, réactants et produits, selon lequel les coefficients stoechiométriques des réactants sont négatifs, ceux des produits positifs, des coefficients stoechiométriques nuls étant attribués aux constituants et/ou pseudo-constituants ne figurant ni comme réactant ni comme produit pour une réaction donnée. Par réaction, il n'y a qu'un seul réactant appartenant à l'ensemble des pseudo-constituants {RES$_1$, RES$_2$, .., RES$_p$, ASP$_1$, ASP$_2$, .., ASP$_q$}. On écrit la matrice stoechiométrique sur une base molaire. Avec ces conventions, la matrice des coefficients stoechiométriques, normalisée par réaction (par ligne) avec le nombre de moles du réactant, s'écrit avec une seule valeur -1 par ligne ou par réaction, cette valeur -1 se trouvant dans la colonne correspondant au seul constituant réactant :

|  | H$_2$S | SAT | ARO | COK$_1$ | COK$_2$ | ... | COK$_s$ | RES$_1$ | RES$_2$ | .... | RES$_p$ | ASP$_1$ | ASP$_2$ | ... | ASP$_q$ |
|---|---|---|---|---|---|---|---|---|---|---|---|---|---|---|---|
| R$_1$ | $\alpha_{11}$ | $\alpha_{12}$ | $\alpha_{13}$ | $\alpha_{14}$ | $\alpha_{15}$ | $\alpha_{1..}$ | $\alpha_{1s}$ | -1 | 0 | 0 | 0 | 0 | 0 | 0 | 0 |
| R$_2$ | $\alpha_{21}$ | $\alpha_{22}$ | $\alpha_{23}$ | $\alpha_{24}$ | $\alpha_{25}$ | $\alpha_{2..}$ | $\alpha_{2s}$ | 0 | -1 | 0 | 0 | 0 | 0 | 0 | 0 |
| ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... |
| R$_u$ | $\alpha_{u1}$ | $\alpha_{u2}$ | $\alpha_{u3}$ | $\alpha_{u4}$ | $\alpha_{u5}$ | $\alpha_{u.}$ | $\alpha_{us}$ | 0 | 0 | 0 | -1 | 0 | 0 | 0 | 0 |
| ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... |
| R$_r$ | $\alpha_{r1}$ | $\alpha_{r2}$ | $\alpha_{r3}$ | $\alpha_{r4}$ | $\alpha_{r5}$ | $\alpha_{r.}$ | $\alpha_{rs}$ | 0 | 0 | 0 | 0 | 0 | 0 | 0 | -1 |

A toute valeur de l'indice r de ligne correspond donc une seule valeur $k$, notée notée $k(r)$, pour laquelle :

$$\alpha_{rk(r)} = -1 \qquad\qquad (5)$$

Cette valeur de $k$ est notée $k(r)$.

Les coefficients stoechiométriques $\alpha_{rk}$ doivent vérifier Nr équations de conservation de la masse qui s'écrivent :

$$\sum_{k=1}^{Nt} \alpha_{rk} MW_k = 0. \quad , \quad 1 \leq r \leq Nr, \text{ les } \alpha_{rk} \text{ étant exprimés en fractions molaires} \quad (6)$$

avec :

$r$ : l'indice de ligne ou le numéro de réaction

$k$ : l'indice de colonne qui réfère à un constituant donné, pseudo ou non, dans la liste des constituants et pseudo-constituants.

$MW_k$ : la masse molaire du constituant $k$.

Selon l'invention, une première estimation des coefficients stoechiométriques $\alpha_{rk}$ est obtenue :

- par une valeur nulle pour la colonne correspondant au pseudo-constituant SAT ; ce constituant est classé ici numéro 2 : $\alpha_{r2} = 0$.
- par l'équation : $\alpha_{rk} = e_{rk} t_{rk}$ (7), pour les autres colonnes.

avec :

$e_{rk}$ : les coefficients stoechiométriques d'un modèle cinétique élémentaire donnant la répartition du soufre dans les différents constituants et pseudo-constituants, présentés plus avant dans le prochain paragraphe,

$t_{rk}$ : les éléments d'une matrice de transformation, définis par l'équation :

$$t_{rk} = \frac{n_{Sk(r)}}{n_{Sk}} \qquad (8) \qquad ,$$

où $n_{Sk}$, $n_{Sk}(r)$ désigne respectivement le nombre d'atomes de soufre dans le constituant $k$ et dans le constituant $k(r)$, ces nombres d'atomes étant obtenus par l'équation (3).

En réarrangeant l'équation (6), on obtient ensuite les coefficients stoechiométriques du constituant SAT :

$$\alpha_{rSAT} = -\frac{1}{MW_{SAT}} \sum_{k \neq SAT} \alpha_{rk} MW_k \qquad (9)$$

Les coefficients stoechiométriques $e_{rk}$ sont typiquement tirés du modèle cinétique élémentaire défini par Lamoureux-Var et Lorant (2007) et décrit dans la demande de brevet FR2892817, qui est construit sur la répartition de tout le soufre dans les différentes fractions de la coupe Cn+ (n typiquement égal à 14) avec les considérations suivantes :

- on estime que la fraction des saturés ne contient pas de soufre ;
- on estime que le soufre contenu dans la fraction des résines donne naissance à de l'hydrogène sulfuré et s'incorpore en partie dans les fractions des insolubles et des aromatiques ;
- on estime que le soufre contenu dans la fraction des asphaltènes donne naissance à de l'hydrogène sulfuré et s'incorpore en partie dans les fractions des insolubles et des aromatiques ;
- on suppose en outre que le soufre dans les asphaltènes et le soufre dans les résines n'interagissent pas ;
- de plus, on considère que plusieurs réactions coexistent en parallèle au sein de chaque fraction, ces réactions étant caractérisées par des constantes de temps différentes.

On écrit le système réactionnel considéré dans ce modèle cinétique élémentaire construit sur la répartition du soufre comme :

$$\left| \begin{array}{l} S^{RESj} \xrightarrow{K_{S^{RESj}}(T)} u_{j1} S^{H2S} + 0 \, S^{SAT} + u_{j3} S^{ARO} + u_{j4} S^{COK_1} + \ldots \quad , \quad j=1,\,..,\,p \\[2mm] S^{ASPj} \xrightarrow{K_{S^{ASPj}}(T)} v_{j1} S^{H2S} + 0 \, S^{SAT} + v_{j3} S^{ARO} + v_{j4} S^{COK_1} + \ldots \quad , \quad j=1,\,..,\,q \end{array} \right| \quad , \forall\, t \geq 0 \quad (10)$$

où $S^{H2S}$, $S^{RESj}$, $S^{ASPj}$, $S^{ARO}$, $S^{COK_1}$, $S^{ASPj}$, .. désignent respectivement le soufre hébergé par l'$H_2S$, la fraction résine '$RES_j$', la fraction asphaltène '$ASP_j$', la fraction aromatique '$ARO$', la fraction '$COK_1$', .., les différentes espèces de soufre considérées étant donc différenciées par la nature moléculaire de leur hébergement.
avec :

$T$ : la température
$t$ : le temps
$u_{j1}$, $u_{j2}$, $u_{jn}$ : des coefficients stoechiométriques, définis de telle façon que les réactions soient équilibrées en masse
$v_{j1}$, $v_{j2}$, $v_{jn}$ : des coefficients stoechiométriques, définis de telle façon que les réactions soient équilibrées en masse

$K_{S^{RESj}}(T)$, $K_{S^{ASPj}}(T)$ : des constantes de temps par réaction $j$ : $1 \leq j \leq p$ ou $1 \leq j \leq q$.

Les constantes cinétiques de réaction sont typiquement calculées par :

$$K_r(T) = A_r \, \mathrm{Exp}\!\left(\frac{-E_r}{R\,T}\right) \qquad (11)$$

avec :

$R$ : la constante des gaz parfaits ($R$ = 8.314 J.K$^{-1}$.mol$^{-1}$)

$A_r$ : le facteur pré-exponentiel, désigné également par l'expression "facteur de fréquence", de la réaction $r$
$E_r$ : l'énergie d'activation de la réaction $r$.

Les coefficients stoechiométriques $e_{rk}$ introduits précédemment en notation matricielle se déduisent aisément par identification au système réactionnel (10) en attribuant un coefficient stoechiométrique de -1 à la seule espèce soufre réactant (indice de colonne $k$ égal à $k(r)$) de chaque réaction $r$.

Le modèle réactif selon l'invention, écrit sur la base d'espéces moléculaires, étant calqué sur le modèle cinétique élémentaire défini par Lamoureux-Var et Lorant (2007), hérite naturellement des paramètres cinétiques du modèle cinétique élémentaire :

$$K_{RESj}(T) \equiv K_{sRESj}(T) \quad 1 \le j \le p \qquad\qquad (12)$$

$$K_{ASPj}(T) \equiv K_{sASPj}(T) \quad 1 \le j \le q$$

Dans la méthode selon l'invention, on note que :

- la masse molaire des différents pseudo-constituants considérés {SAT, ARO, RES$_1$, RES$_2$, .., RES$_p$, ASP$_1$, ASP$_2$, .., ASP$_q$} pour représenter la fraction Cn+ et {COK$_1$, COK$_2$, .., COK$_s$} est une donnée intrinsèque, et comme admis par définition, la masse molaire d'un constituant est un paramètre constant, invariant dans le temps ;

- dans l'ensemble {SAT, ARO, RES$_1$, RES$_2$, .., RES$_p$, ASP$_1$, ASP$_2$, .., ASP$_q$, COK$_1$, COK$_2$, .., COK$_s$} seul le pseudo-constituant SAT représentant les saturés ne contient pas de soufre. Il s'ensuit que tous les autres constituants dont les COK$_k$ contiennent du soufre.

Modèle thermodynamique a priori selon l'invention

En simulation de réservoir, il est nécessaire de disposer d'un modèle thermodynamique permettant d'estimer les propriétés ou le comportement des phases liquide et/ou vapeur de mélanges de multiples composants, tels que rencontrés in situ dans les réservoirs de pétrole, de bitume ou de gaz, ou en surface lors de l'exploitation de ces mêmes gisements, et offrant la possibilité de prédire en fonction du temps la composition détaillée de fluides produits au cours de la production.

Dans le contexte réactif de l'invention, il est nécessaire de disposer d'un modèle thermodynamique compositionnel où les compositions des phases non aqueuses et non solides sont détaillées en utilisant la même base compositionnelle que le modèle réactif à savoir, pour la coupe Cn+, sur la base des constituants de l'ensemble {SAT, ARO, RES$_1$, RES$_2$, .., RES$_p$, ASP$_1$, ASP$_2$, .., ASP$_q$}.

Les solides {COK$_1$, COK$_2$, .., COK$_s$} sont caractérisés uniquement que par leur masse molaire, celle-là même qui a été utilisée dans les équations (2) et (3), et ne sont pas considérés dans le calcul des propriétés des phases huile, gaz et eau.

La masse molaire de chacun des constituants {SAT, ARO, RES$_1$, RES$_2$, .., RES$_p$, ASP$_1$, ASP$_2$, .., ASP$_q$} est identique à celle qui a été utilisée pour construire le modèle réactionnel.

Les autres paramètres thermodynamiques de chacun des constituants {SAT, ARO, RES$_1$, RES$_2$, .., RES$_p$, ASP$_1$, ASP$_2$, .., ASP$_q$} sont corrélés, par une méthode connue en soi, à leur masse molaire.

Si l'on choisit d'utiliser une thermodynamique par corrélation, les paramètres de constituants dans les corrélations peuvent être ajustés à partir de calculs effectués avec une équation d'état où les paramètres par constituant sont typiquement obtenus à partir de bases de données quand il s'agit de "corps purs", comme l'$H_2S$ (ou comme par exemple le normal-pentane si l'on choisit d'introduire ce constituant dans la description du Cn-), ou, quand il s'agit de pseudo-constituants, à partir de corrélations basées au moins en partie sur la masse molaire.

Estimation des masses molaires

L'estimation a priori des masses molaires des pseudo-constituants peut reposer sur :

- des mesures de masses molaires de fractions SARA effectuées avant ou après certaine(s) durée(s) de mise en conditions d'aquathermolyse ;

- et/ou d'analyses élémentaires des différentes fractions SARA effectuées avant ou après certaine(s) durée(s) de mise en conditions d'aquathermolyse ;

- et/ou une base de données de masses molaires de fractions SARA constituée à partir d'éléments trouvés dans la littérature, ou d'éléments privés.

Les estimations a priori des masses molaires peuvent être affinées par processus d'optimisation sous contrainte :

- par exemple pour reproduire des mesures de masses molaires sur le brut ou le bitume pris dans leur ensemble, mesures effectuées avant ou après certaine(s) durée(s) de mise en conditions d'aquathermolyse ;

- par exemple en les prenant comme paramètres d'ajustement de simulations, à l'échelle du réacteur d'aquathermolyse, destinées à reproduire l'évolution mesurée expérimentalement des fractions massiques de l'$H_2S$, des saturés, aromatiques, résines et asphaltènes ;

- par exemple en les prenant comme paramètres d'ajustement de simulations, à l'échelle du réservoir, destinées à reproduire la production d'$H_2S$ telle que mesurée sur champ exploité par procédé thermique.

Pour conserver une cohérence entre le modèle réactionnel et le modèle thermodynamique, il convient de faire évoluer les paramètres thermodynamiques des pseudo-constituants en cohérence avec l'évolution de leur masse molaire.

Ainsi, à l'issue de cette étape, nous avons

- construit une représentation thermodynamique à nombre Nc de composants et/ou pseudo-composants utilisable pour estimer les propriétés ou le comportement des phases liquide et/ou vapeur de mélanges de multiples composants, tels que rencontrés in situ dans les réservoirs de pétrole ou de gaz ou en surface lors de l'exploitation de ces mêmes gisements,

- construit le schéma réactionnel associé aux Nc composants, à Nr réactions, en particulier la matrice Nr x Nc des coefficients stoechiométriques des différentes réactions, ce schéma réactionnel étant construit à partir d'un schéma réactionnel élémentaire obtenu par bilan matière sur l'élément soufre réparti au sein de fractions telles que des résines ou des fractions asphalténiques.

**1.2 Réalisation de la simulation réservoir**

En ingéniérie pétrolière et/ou gazière de gisement, un simulateur de réservoir (également dit simulateur de gisement) est un outil logiciel permettant de simuler les procédés d'exploitation de réservoirs souterrains d'hydrocarbures. La modélisation des écoulements dans un réservoir pétrolier ou dans un stockage sous-terrain est fondée essentiellement sur l'application au réservoir préalablement maillé (ou à une portion de celui-ci) de la loi de Darcy bien connue décrivant l'écoulement de fluides en milieux poreux, de lois de bilans de matière dans chaque unité de volume, des relations thermodynamiques régissant l'évolution des propriétés de phase des fluides tels que la viscosité, la masse volumique, sur des conditions initiales, sur des conditions aux limites de fermeture de la structure, et sur des conditions aux puits producteurs et/ou injecteurs. Dans le cadre de l'invention, l'outil logiciel doit permettre de simuler l'injection de vapeur dans un gisement de pétrole lourd en tenant compte des effets thermiques dans un contexte chimiquement réactif, les hydrocarbures (au sens large) étant représentés comme des mélanges multi-constituants. Le simulateur de gisement est alors dit thermique, compositionnel et réactif. L'exemple d'un tel outil est le logiciel PumaFlow (2012).

En simulation compositionnelle de réservoir avec présence de vapeur d'eau, les équilibres de phases entre les phases "liquide aqueux" (dite "eau"), "liquide hydrocarbure" (dite huile), et gaz, se calculent en utilisant typiquement les hypothèses suivantes :

- la phase gaz contient de la vapeur d'eau, et au moins le plus léger des constituants de type "hydrocarbure", ici l'$H_2S$ ;

- la phase huile contient tous les constituants dits "hydrocarbures", mais ne contient pas d'eau ;

- la phase "eau" est essentiellement de l'eau plus ou moins salée, une option de dissolution dans la phase aqueuse de constituants de type 'hydrocarbure" pouvant être activée par exemple pour l'$H_2S$ qui, comme le dioxyde de carbone ($CO_2$), peut se dissoudre notablement dans une phase aqueuse.

## Calculs d'équilibre entre phases

Le calcul des équilibres entre phases est effectué à partir de constantes d'équilibre par constituant calculées en cours de simulation (ou pré calculées avant la simulation) à partir de fugacités par constituant par phase, elles-mêmes obtenues à partir d'une équation d'état, typiquement une équation d'état cubique :

- pour le partage des constituants entre phases huile et gaz, l'une des équations les plus couramment utilisées est celle dite de Peng-Robinson, décrite dans les deux documents suivants :

   Peng, D. Y., and Robinson, D. B. 1976. A New Two-Constant Equation of State. Industrial and Engineering Chemistry Fundamentals, 15, 59-64.

   Peng, D. Y., and Robinson, D. B. 1978. The Characterization of the Heptanes and Heavier Fractions for the GPA Peng-Robinson Programs. Gas Processors Association, Research Report 28, Tulsa, 1978

- pour le partage des constituants entre phases gaz et eau, l'équation la plus couramment utilisée est celle de Søreide et Whitson décrite dans le document suivant :

   Søreide, I. and Whitson, C. H. 1992. Peng-Robinson Prédictions for Hydrocarbons CO2, N2, and H2S with Pure Water and NaCl Brine. Fluid Phase Equilibria, 77, 217-240.

Les logiciels industriels de simulation de réservoir offrent également la possibilité de calculer les équilibres entre phases à partir de constantes d'équilibre tabulées, en fonction de la pression et de la température et possiblement en fonction d'un index compositionnel, introduites par l'ingénieur comme données d'entrées de la simulation.

Une autre possibilité offerte pour les équilibres gaz-huile est que les constantes d'équilibre soient calculées à partir de corrélations analytiques, l'ingénieur ayant alors à introduire les paramètres de chaque constituant dans les corrélations. Ces deux possibilités, constantes d'équilibre tabulées ou par corrélation analytique, sont celles qui sont offertes en premier lieu par les logiciels industriels en contexte réactionnel et thermique, une description de ces options pouvant être trouvée dans la publication suivante :

   Coats, K. H. 1980. In-Situ Combustion Model. SPE Journal, December, 533-554

Dès lors que les entrées pour le calcul des équilibres sont des constantes d'équilibre par constituant tabulées ou par corrélation, une méthodologie utilisée par les hommes de l'art est de générer les tables ou les paramètres des constituants à partir d'une équation d'état de référence. Les tables doivent être générées pour des pressions et températures pouvant être rencontrées en cours de simulation numérique de réservoir.

Les paramètres des constituants dans l'équation d'état de référence sont typiquement les paramètres critiques (température, pression, volume ou facteur de compressibilité), le facteur acentrique, des paramètres d'interactions binaires entre constituants.

Les paramètres thermodynamiques de corps purs tels que l'$H_2$S sont connus et sont répertoriés par divers organismes tels que N.I.S.T. (National Institute of Standards and Technology, *http://www.nist.gov)*. Par contre, les paramètres de pseudo-constituants, paramètres critiques, facteur acentrique, des paramètres d'interactions binaires doivent être estimés. De nombreuses corrélations sont disponibles, dont des corrélations basées sur la masse molaire du pseudo-constituant, sa densité et sa température d'ébullition, ces deux dernières propriétés pouvant elles-mêmes être estimées par des corrélations basées sur la masse molaire du pseudo-constituant. Pour guider le choix des corrélations à utiliser, on peut utiliser certaines informations relatives à la nature du pseudo-constituant (comme une analyse élémentaire qui donne la répartition en masse de différents éléments atomiques). et/ou à sa structure en s'inspirant par exemple la publication de Boduszynski :

   Boduszynski, M.M. 1987. Composition of Heavy Petroleums. 1. Molecular Weight, Hydrogen Deficiency, and Heteroatom Concentration as a Function of Atmospheric Equivalent Boiling Point up to 1400 °F (760 °C). Energy & Fuels, 1, 2-11

Enfin, il convient d'ajouter que la valeur mesurée de la masse molaire de composés lourds est connue pour dépendre de la technique expérimentale utilisée, par exemple comme reporté par :

   Merdrignac, I. and Espinat D. 2007. Physicochemical Characterization of Petroleum Fractions: the State of the Art. Oil & Gas Science and Technology - Rev. IFP, 62, 1, 7-32

Quelque soit la sophistication de la méthode utilisée pour les déterminer, les masses molaires des pseudo-constituants lourds restent donc des estimations, qui peuvent être utilisées comme des premières estimations dans un processus d'optimisation de paramètres, ou ne pas être modifiées si on les considère comme suffisamment représentatives, ou s'il s'avère *a posteriori* que les valeurs retenues *a priori* formaient un choix judicieux.

Calculs de propriétés de phases

Les propriétés de phases utiles aux calculs effectués en simulation numérique compositionnelle de réservoir sont, par phase : la viscosité, l'enthalpie, la masse molaire, la densité molaire (inverse du volume molaire), le produit de ces deux dernières propriétés étant égal à la masse volumique, dont l'estimation est indispensable aux calculs des effets gravitaires, ceux-ci étant, en effet, liés aux différences de masses volumiques entre phases. Les masses molaires des phases sont calculables directement à partir des résultats des calculs d'équilibre qui fournissent les compositions de chaque phase.

Diverses possibilités sont offertes pour calculer les volumes molaires des phases huile et gaz :

- par une équation d'état typiquement cubique généralement identique à celle utilisée pour les calculs d'équilibre, en utilisant les mêmes paramètres par constituant que ceux qui sont utilisés pour le calcul des équilibres ;

- par des corrélations différenciées selon la nature de la phase huile ou gaz, ces corrélations utilisant des paramètres spécifiques définis par constituant.

Pour le calcul des viscosités, il peut être utilisée une corrélation unique pour les calculs de viscosité des phases huile et gaz ou, plus fréquemment pour la simulation de réservoirs d'huile lourde, une corrélation pour la viscosité de l'huile et une corrélation différente pour la viscosité du gaz. Ces corrélations utilisent des paramètres spécifiques définis par constituant.

Les enthalpies des phases sont habituellement calculées à partir de chaleurs spécifiques définies par constituant et par phase, la chaleur spécifique par constituant dans la phase gaz pouvant être calculée alternativement à partir une chaleur spécifique par constituant dans la phase huile et d'une chaleur latente par constituant.

On peut trouver davantage de détails dans la publication de Coats précitée, dans celle de Crookston, et dans les manuels de référence de logiciels industriels de simulation de réservoir tels que PumaFlow.

Crookston, R. B., Culham, W. E., Chen, W. H. 1979. A Numerical Simulation Model Recovery Processes for Thermal Recovery Processes. SPE 6724, SPE J., Feb., 37-58*.*

La méthode selon l'invention permet donc de modéliser des fluides hydrocarbonés en un mélange de constituants, chacun de ces constituants étant caractérisé par des paramètres thermodynamiques pour modéliser les propriétés physiques du fluide, cette modélisation thermodynamique étant par ailleurs cohérente avec un modèle cinétique multi-réactionnel, où l'un des produits des réactions modélisées est l'hydrogène sulfuré ($H_2S$).

A l'issue de cette étape, on obtient grâce, à la simulation dite "de réservoir", les quantités d'$H_2S$ pouvant être générées au cours de l'exploitation de gisements pétroliers par injection de vapeur d'eau.

**2. Détermination des conditions d'exploitation en fonction de la quantité d'hydrogène sulfuré**

Ces quantités d'hydrogène sulfuré peuvent être comparées à une quantité passée mesurée (historique de production). On peut alors ajuster des paramètres du modèle cinétique et/ou du modèle thermique, de façon à ce que les estimations soient plus précises pour le gisement étudié. Avec de tels modèles ajustés, on peut prédire la production d'$H_2S$ du gisement, pour des conditions d'exploitation données.

On peut également déterminer les conditions d'exploitation en adaptant les matériaux de complétion et/ou les dispositifs de traitement de gaz, de façon à limiter les dégâts causés par attaque acide.

On peut également modifier les conditions d'injection de la vapeur pour chercher à réduire les quantités d'$H_2S$ produites.

On peut également comparer la quantité d'hydrogène sulfuré à une teneur maximale légale (de 10 à 50 ppm en volume, selon l'organisme suivant : Agency for Toxic Substances & Disease Registry des Etats-Unis), et on détermine alors les conditions d'exploitation de façon à maintenir une production d'hydrogène sulfuré inférieure à cette teneur maximale légale.

**3. Production des hydrocarbures**

En appliquant les conditions d'exploitation déterminée à l'étape 2, par exemple la quantité, le débit, la température de la vapeur injectée, ou le type de matériau, on produit les hydrocarbures dans le respect des normes légales et en minimisant l'impact sur le matériel.

**EXEMPLE NON LIMITATIF DE REALISATION**

L'exemple décrit ci-après a été réalisé en utilisant comme outil de simulation de réservoir industriel, le simulateur PumaFlow mais d'autres logiciels industriels de simulation de réservoir auraient pu être utilisés en lieu et place de ce simulateur. Les trois phases fluides représentées sont une phase aqueuse, une phase dite huile, une phase gazeuse. Ce logiciel est utilisé ici pour modéliser l'injection de vapeur dans un réservoir d'huile lourde en prenant en compte des effets thermiques et compositionnels dans un contexte chimiquement réactif. Des options classiquement utilisées en simulation de réservoir compositionnelle et thermique sont sélectionnées pour calculer les équilibres de phases et les propriétés de phases :

- utilisation de tables de constantes d'équilibre par constituant pour le calcul des équilibres gaz-huile, tous les pseudo-constituants organiques et l'$H_2S$ étant admis à se partager entre la phase huile et la phase gaz ;

- utilisation de tables de constantes d'équilibre gaz-eau pour l'$H_2S$, seul constituant admis à se dissoudre dans la phase aqueuse ;

- utilisation de corrélations pour le calcul des propriétés des phases huile et gaz (densité, viscosité, enthalpie), les paramètres par constituant utilisés dans ces corrélations étant pour part tabulés en fonction de la température (et de la pression, pour les paramètres intervenant dans le calcul des densités).

Modélisation thermocinétique

Des expériences d'aquathermolyse ont été réalisées sur des échantillons de bitume en provenance de Fisher Field Athabasca, une partie des résultats ayant été publiés dans Lamoureux-Var et coll. (2010).
Les résultats de ces expériences d'aquathermolyse ont été interprétés en termes de répartition du soufre dans les différentes fractions, et se traduisent par la matrice stoechiométrique suivante :

| TABLEAU 1 - MATRICE STOECHIOMETRIQUE [$e_{rk}$] ISSUE DES EXPERIENCES D'AQUATHERMOLYSE | | | | | | | | | |
|---|---|---|---|---|---|---|---|---|---|
| Réaction | Réactant | S($H_2S$) | S(SAT) | S(ARO) | S(RES1) | S(RES2) | S(ASP1) | S(ASP2) | S(COK) |
| R1 | S(RES1) | 0 | 0.60 | 0.38 | -1 | 0 | 0 | 0 | 0.40 |
| R2 | S(RES2) | 1.00 | 0 | 0.00 | 0 | -1 | 0 | 0 | 0.00 |
| R3 | S(ASP1) | 0.00 | 0 | 0.00 | 0 | 0 | -1 | 0 | 1.00 |
| R4 | S(ASP2) | 0.07 | | | 0 | 0 | 0 | -1 | 0.33 |

et des constantes cinétiques par réaction selon l'équation (11), qui sont calculées en utilisant, par réaction, un facteur de fréquence et une énergie d'activation. Les facteurs de fréquence sont donnés dans la table ci-dessous.

| TABLEAU 2 - FACTEURS DE FREQUENCE, JOUR-1 | |
|---|---|
| Réaction | (1) |
| R1 | 8.64E+18 |
| R2 | 8.64E+18 |
| R3 | 8.64E+18 |
| R4 | 8.64E+18 |

Le tableau (1) montre que l'interprétation des résultats expérimentaux a nécessité l'introduction de deux espèces de résines et de deux espèces d'asphaltènes.
Les expériences d'aquathermolyse sont réalisées en introduisant des quantités connues d'huile brute, de roche, et d'eau dans un tube en or placé après évacuation de l'air sous confinement d'azote. Le tube, une fois scellé, est placé dans une enceinte maintenue à pression constante, laquelle enceinte est elle-même placée dans un four maintenu à température constante, pour une durée donnée. Les expériences sont réalisées à différentes températures et pendant différentes durées. A la sortie du four, les tubes en or sont refroidis, percés sous ambiance contrôlée, puis le contenu des tubes en or est analysé et quantifié en masse en séparant : les gaz qui sont récupérés par évacuation à 10-5 bar, et analysés par chromatographie gazeuse, le C14+ qui subit une analyse SARA et la fraction insoluble, des analyses élémentaires étant effectuées sur les fractions SARA, et sur la fraction insoluble.

La modélisation thermocinétique pour les simulations de réservoir repose sur les hypothèses et simplifications suivantes :

- l'huile considérée est, dans son état initial, une coupe C14+ ;

- on adopte une description de type SARA à 4 pseudo-constituants (appelés SAT, ARO, RES, ASP), les pseudo-constituants RES et ASP étant splittés chacun en deux pseudo-constituants, respectivement RES1, RES2 et ASP1, ASP2, ceci permettant de représenter les réactions, telles qu'introduites par un modèle cinétique élémentaire basé sur la répartition du soufre ;

- un seul constituant solide produit de réaction est considéré, appelé COK, pour représenter le résidu solide accueillant le soufre venant des pseudo-constituants organo-soufrés

Les résultats des analyses élémentaires sont prises en compte, par une méthode connue en soi, pour fixer les valeurs a priori des masses molaires des pseudo-constituants.

En un premier temps, une équation d'état de Peng-Robinson (EOS) est utilisée pour modéliser la densité des phases huile et gaz ; une première estimation des paramètres des pseudo-constituants dans l'EOS est obtenue en utilisant des corrélations basées sur la masse molaire :

- pour les paramètres critiques :

   Souahi, F. and Kaabeche, H. 2008. Developing Correlations for Prédiction of Petroleum Fraction Properties using Genetic Algorithms, OGST, 63, No. 2, March-April, 229-237 ;

- pour les facteurs acentriques, une corrélation privée inspirée de celle proposée par Souahi et coll. (2008) ;

- pour les paramètres d'interactions binaires des pseudo-constituants avec l'$H_2S$ :

   Stamataki, S. and Magoulas, K. 2000. Prediction of Phase Equilibria and Volumetric Behavior of Fluids with High Concentration of Hydrogen Sulfide. Oil & Gas Science and Technology - Rev. IFP, 55, 5, 511-522 ;

- *pour les corrections de volume :*

   Loria, H, Pereira-Almao, P. et Satyro, M. 2009. Prédiction of Density and Viscosity of Bitumen Using the Peng-Robinson Equation of State. Ind. Eng. Chem. Res., 48, 10129-10135 ;

Ces paramètres ont été ajustés pour caler une densité spécifique du brut de 10 degrés API.

Pour les chaleurs spécifiques des pseudo-constituants, on a utilisé la corrélation de Dadgostar et Shaw (2012) basée sur le nombre d'atomes par unité de masse, cette information étant obtenue à partir de l'estimation de la masse molaire et des mesures d'analyses élémentaires :

   Dadgostar, N., Shaw, J.M. 2012. A Predictive Correlation for the Constant-Pressure Specific Heat Capacity of Pure and Ill-Defined Liquid Hydrocarbons. Fluid Phase Equilibria, 313, 211- 226 ;

Les densités spécifiques et les températures d'ébullition par constituant nécessaires à certaines corrélations ont été obtenues par corrélation avec la masse molaire.

Le tableau 3 présente les paramètres des pseudo-constituants ainsi obtenus :

| TABLEAU 3-PARAMETRES EOS DES PSEUDO-CONSTITUANTS | | | | | |
|---|---|---|---|---|---|
| Nom | *MW,* g | *Tc,* °C | *Pc,* bars | $\omega$ | *C,* cm$^3$ | $\delta H_2 S$ |
| SAT | 195.11 | 435.95 | 19.26 | 0.5875 | 17.4 | 0.01489 |
| ARO | 930.38 | 759.47 | 8.51 | 1.4115 | -131.5 | -0.10854 |
| RES1 | 1324.40 | 808.81 | 7.71 | 1.5509 | -344.9 | -0.12942 |
| RES2 | 1318.43 | 808.26 | 7.72 | 1.5494 | -341.3 | -0.12919 |

(suite)

| TABLEAU 3-PARAMETRES EOS DES PSEUDO-CONSTITUANTS | | | | | | |
|---|---|---|---|---|---|---|
| Nom | MW, g | Tc, °C | Pc, bars | $\omega$ | C, cm$^3$ | $\delta H_2S$ |
| ASP1 | 2702.30 | 868.77 | 7.02 | 1.7106 | -1313.4 | -0.15335 |
| ASP2 | 2691.02 | 868.56 | 7.02 | 1.7101 | -1305.0 | -0.15327 |
| COK | 15.06 | | | | | |

Des calculs d'équilibres thermodynamiques ont été effectués avec un logiciel spécialisé, appelé par les gens de métier "PVT Package", à diverses pressions et températures, en variant les compositions des mélanges. Les résultats en densités de ces calculs ont été pris comme référence pour obtenir les paramètres des constituants dans les corrélations pour le calcul des densités, et les compositions des phases ont été utilisées pour générer les tables de constantes d'équilibre gaz-huile en fonction de la pression et de la température.

Les constantes d'équilibre pour le système de gaz-eau ont été générées en utilisant l'équation d'état de Søreide-Whitson (1992).

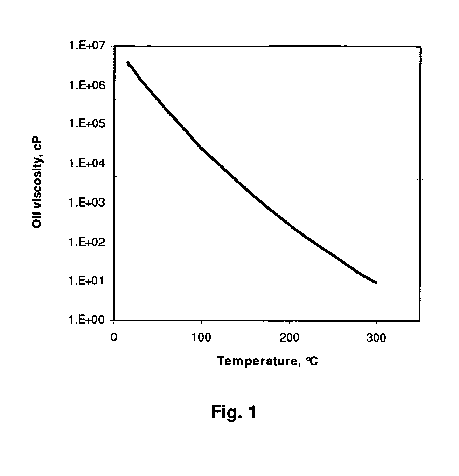

La phase huile n'étant pas modélisée comme une huile morte, la modélisation de viscosité d'huile doit tenir compte de la possible présence de $H_2S$ (en petite quantité) dans la phase huileuse. Une table des viscosités par constituant par rapport à la température a été générée de manière un peu empirique, mais afin d'obtenir un comportement de viscosité de l'huile morte vraisemblable pour le secteur du Foster Creek. La courbe de viscosité de l'huile morte telle que simulée avec ces tables est illustrée Figure 1 en fonction de la température.

La matrice des coefficients stoechiométriques sur la base des pseudo-constituants, directement issue de la matrice stoechiométrique basée sur la répartition du soufre donnée dans le tableau 1 en utilisant les équations (7), (8) et (9), est donnée dans le tableau 4.

### TABLEAU 4-MATRICE STOECHIOMETRIQUE [$\alpha_{rk}$] (1) POUR LES SIMULATIONS DE RESERVOIR

| Réaction | Réactant | $H_2S$ | SAT | ARO | RES1 | RES2 | ASP1 | ASP2 | COK |
|---|---|---|---|---|---|---|---|---|---|
| R1 | RES1 | 0.4950000 | 2.8579821 | 0.5979021 | -1 | 0 | 0 | 0 | 12.8571429 |
| R2 | RES2 | 2.1000000 | 6.3905081 | 0.0000000 | 0 | -1 | 0 | 0 | 0.0000000 |
| R3 | ASP1 | 0.0000000 | 7.8735564 | 0.0000000 | 0 | 0 | -1 | 0 | 77.4285714 |
| R4 | ASP2 | 0.3514000 | 1.8603513 | 2.1062937 | 0 | 0 | 0 | -1 | 23.6657143 |

Dans les différentes simulations du réacteur expérimental dont les résultats sont présentés ci-après, certains ajustements sur les coefficients stoechiométriques ont été effectués. C'est pourquoi cette première version de la matrice stoechiométrique est identifiée par l'étiquette (1).

Simulations des expériences d'aquathermolyse en utilisant un logiciel de simulation de réservoir

Les expériences d'aquathermolyse ont été simulées avec un simulateur de réservoir pour valider le modèle thermocinétique.

Dans le modèle de simulation, une maille unique est utilisée pour représenter le « réacteur » expérimental (le tube en or). Cette maille est entourée de mailles représentant le four. Seuls les flux de chaleur sont autorisés entre la maille "réacteur" et les mailles environnantes. En outre, la maille "réacteur" n'est perforée par aucun puits : elle est donc "scellée" comme le réacteur expérimental. La maille "réacteur" est initialisée avec les mêmes proportions de sable, d'huile, d'eau, d'azote (constituant ajouté à la liste des constituants précités) comme dans les expériences, et la pression initiale est fixée à 100 bars, pression utilisée lors des expériences. La température du réacteur est fixée à 320 °C qui est la température la plus élevée utilisée pour les expériences d'aquathermolyse.

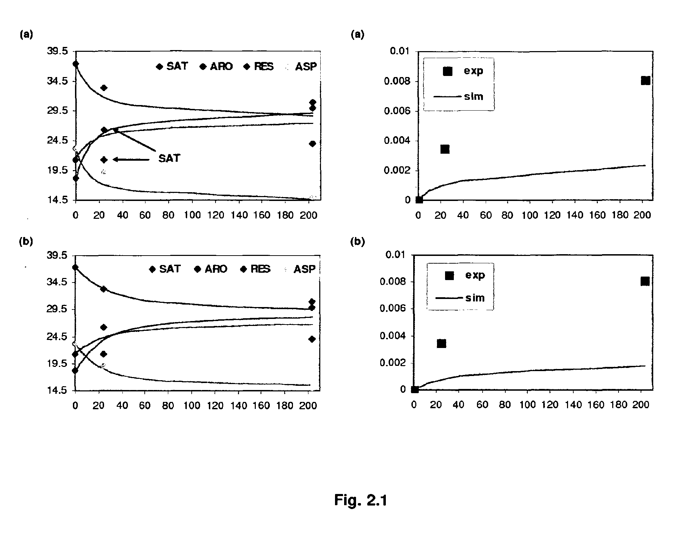

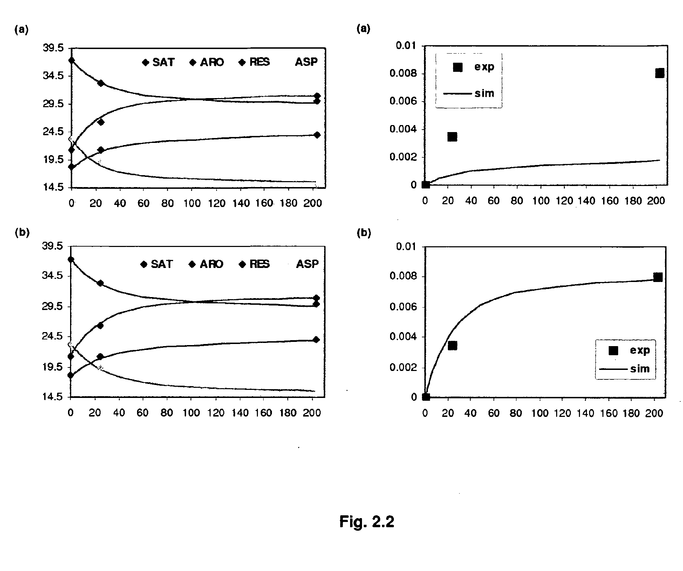

Les résultats de différentes simulations sont comparés aux résultats expérimentaux sur les Fig. 2.1 et 2.2. Dans ces figures, à gauche, est illustrée l'évolution en fonction du temps des fractions massiques des pseudo-constituants SAT, ARO et des fractions massiques RES et ASP correspondant respectivement à la somme des fractions massiques RES 1 et RES2 et à la somme des fractions massiques ASP1 et ASP2. A droite de ces figures, est illustrée en fonction du temps la masse de $H_2S$ rapportée à la somme des masses des pseudo-constituants SAT, ARO, RES1, RES2, ASP1, ASP2. Les marques sont les résultats expérimentaux, les lignes les résultats simulés.

Les résultats présentés Fig.2.1 (a) ont été obtenus avec la stoechiométrie (1), les énergies d'activation et les facteurs de fréquence (tableau 2) directement issus de l'interprétation des expériences. On observe que les vitesses de réaction simulées sont trop élevées par rapport à celles observées expérimentalement. Les résultats présentés Fig.2.1(b) ont été obtenus toujours avec la stoechiométrie(1), en conservant les mêmes énergies d'activation mais avec des facteurs de fréquence réduits d'environ un facteur 2 (donnés en colonne 2 du tableau 5), ce qui reste un ajustement très modéré.

| TABLEAU 5 - FACTEURS DE FREQUENCE, JOUR-1 | | |
|---|---|---|
| Réaction | (2) | (3) |
| R1 | 4.50E+18 | 4.50E+18 |
| R2 | 4.50E+18 | 4.50E+18 |
| R3 | 4.50E+18 | 3.50E+18 |
| R4 | 4.50E+18 | 4.50E+18 |

Avec cette modification des facteurs de fréquence, on obtient (cf. Fig.2.1 (b)) un bon calage de la décroissance avec le temps des fractions massiques de résines (RES1+RES2) et d'asphaltène (ASP1+ASP2), mais la production simulée de saturés (SAT) augmente trop au détriment de la production des aromatiques (ARO) par rapport aux résultats expérimentaux, et la production d'$H_2S$ n'est pas reproduite.

La stoechiométrie du pseudo-constituant SAT, non soufré, étant obtenue, non pas directement à partir des résultats expérimentaux, mais par application d'une équation de balance matière, elle absorbe toutes les incertitudes expérimentales. D'autre part, selon le modèle de Lamoureux-Var (2007), le soufre contenu dans les aromatiques ne participe pas à la génération d'$H_2S$ (soufre non labile). On considère donc comme indiqué un ajustement de la stoechiométrie SAT/ARO sans modifier les autres coefficients. Pour ce faire, dans une réaction r, partant des coefficients stoechiométriques $\alpha_{rSAT}$ et $\alpha_{rARO}$, on fixe une nouvelle valeur du coefficient stoechiométrique $\alpha'_{rSAT}$ du pseudo-constituant SAT, et on recalcule le coefficient $\alpha'_{rARO}$ de telle façon à ce que le bilan massique de la réaction soit toujours respecté, soit telle que :

$$\alpha'_{rSAT} MW_{SAT} + \alpha'_{rARO} MW_{ARO} = \alpha_{rSAT} MW_{SAT} + \alpha_{rARO} MW_{ARO} \qquad (13)$$

d'où :

$$\alpha'_{rARO} = (\alpha_{rSAT} - \alpha'_{rSAT}) \frac{MW_{SAT}}{MW_{ARO}} + \alpha_{rARO} \qquad (14)$$

Le tableau (6) rappelle la matrice stoechiométrique (1) et donne le détail de la matrice stoechiométrique (2) utilisée pour ajuster la production des saturés et aromatiques, comme illustré en Fig.2.2 (a). Des caractères gras sont utilisés pour mettre en évidence les différences entre les matrices (1) et (2). On peut constater en Fig. 2.2 (a) le bon accord entre résultats simulés et résultats expérimentaux concernant l'évolution des fractions SARA, mais la production d'$H_2S$ simulée reste très inférieure à la production d'$H_2S$ expérimentale.

La matrice stoechiométrique (3) donnée dans le tableau (6) permet de reproduire la production d'$H_2S$ obtenue expérimentalement. Ceci est illustré Fig. 2.2 (b). Les caractères gras mettent en évidence les coefficients modifiés. On voit que l'on a réduit la stoechiométrie du COK et augmenté la stoechiométrie de l'$H_2S$, ceci de telle façon à ce que le bilan massique de la réaction soit toujours respecté, soit telle que :

$$\alpha'_{rH2S} MW_{H2S} + \alpha'_{rCOK} MW_{COK} = \alpha_{rH2S} MW_{H2S} + \alpha_{rCOK} MW_{COK} \qquad (15)$$

d'où :

$$\alpha'_{rH2S} = (\alpha_{rCOK} - \alpha'_{rCOK}) \frac{MW_{COK}}{MW_{H2S}} + \alpha_{rH2S} \qquad (16)$$

**TABLEAU 6 - MATRICES STOECHIOMETRIQUES [$\alpha_{rk}$] POUR LES SIMULATIONS DE RESERVOIR**

| Réaction | Réactant | $H_2S$ | SAT | ARO | RES1 | RES2 | ASP1 | ASP2 | COK |
|---|---|---|---|---|---|---|---|---|---|
| | | | | Matrice stoechiométrique (1) | | | | | |
| R1 | RES1 | 0.4950000 | 2.8579821 | 0.5979021 | -1 | 0 | 0 | 0 | 12.8571429 |
| R2 | RES2 | 2.1000000 | 6.3905081 | 0.0000000 | 0 | -1 | 0 | 0 | 0.0000000 |
| R3 | ASP1 | 0.0000000 | 7.8735564 | 0.0000000 | 0 | 0 | -1 | 0 | 77.4285714 |
| R4 | ASP2 | 0.3514000 | 1.8603513 | 2.1062937 | 0 | 0 | 0 | -1 | 23.6657143 |
| | | | | Matrice stoechiométrique (2) | | | | | |
| R1 | RES1 | 0.4950000 | 2.8579821 | 0.5979021 | -1 | 0 | 0 | 0 | 12.8571429 |
| R2 | RES2 | 2.1000000 | 6.3905081 | 0.0000000 | 0 | -1 | 0 | 0 | 0.0000000 |
| R3 | ASP1 | 0.0000000 | **0.7000000** | **1.5043795** | 0 | 0 | -1 | 0 | 77.4285714 |
| R4 | ASP2 | 0.3514000 | 1.8603513 | 2.1062937 | 0 | 0 | 0 | -1 | 23.6657143 |
| | | | | Matrice stoechiométrique (3) | | | | | |
| R1 | RES1 | 0.4950000 | 2.8579821 | 0.5979021 | -1 | 0 | 0 | 0 | 12.8571429 |
| R2 | RES2 | 2.1000000 | 6.3905081 | 0.0000000 | 0 | -1 | 0 | 0 | 0.0000000 |
| R3 | ASP1 | **5.9341046** | 0.7000000 | 1.5043795 | 0 | 0 | -1 | 0 | **64.0000000** |
| R4 | ASP2 | 0.3514000 | 1.8603513 | 2.1062937 | 0 | 0 | 0 | -1 | 23.6657143 |

Une modification de la répartition du soufre entre le solide et l'$H_2S$ permet donc de caler les résultats expérimentaux. Il convient de noter par ailleurs que l'on reconnaît à l'$H_2S$ une forte capacité d'adsorption sur des solides apparentés au coke.

Il a été montré que l'$H_2S$ a une capacité à s'adsorber sur du coke de grande surface spécifique. Il vient donc que l'$H_2S$ généré, par aquathermolyse, en conditions données de pression et température, est susceptible de s'adsorber sur le résidu solide organique généré par les réactions (potentiellement assimilable à un coke), voire également sur les solides minéraux.

Le protocole expérimental utilisé pour répartir le soufre entre les différentes fractions à l'issue des expériences d'aquathermolyse comprend une dépressurisation, suivie d'une évacuation, et un refroidissement des réacteurs d'aquathermolyse. Il vient donc que, dès lors que l'$H_2S$ a été adsorbé sur des espèces solides dans le réacteur d'aquathermolyse, le protocole expérimental peut induire une désorption au moins partielle de l'$H_2S$ adsorbé. Cette désorption n'aurait pas lieu si le gaz et l'huile étaient prélevés en gardant le réacteur sous pression et température.

Il vient donc que la quantité d'$H_2S$ mesurée expérimentalement représente un potentiel maximum de production d'$H_2S$, un phénomène d'adsorption sur des solides pouvant maintenir une part de l'$H_2S$ généré par aquathermolyse dans le réacteur maintenu en pression et température.

Selon l'une des caractéristiques de l'invention, un tel phénomène d'adsorption peut être pris en compte par une modification relative de la stoechiométrie $H_2S$ / COK dans le système réactionnel considéré pour modéliser la production d'$H_2S$ par aquathermolyse.

Simulation de la production d'$H_2S$ lors de l'exploitation d'un réservoir d'huile lourde soumis à un procédé SAGD

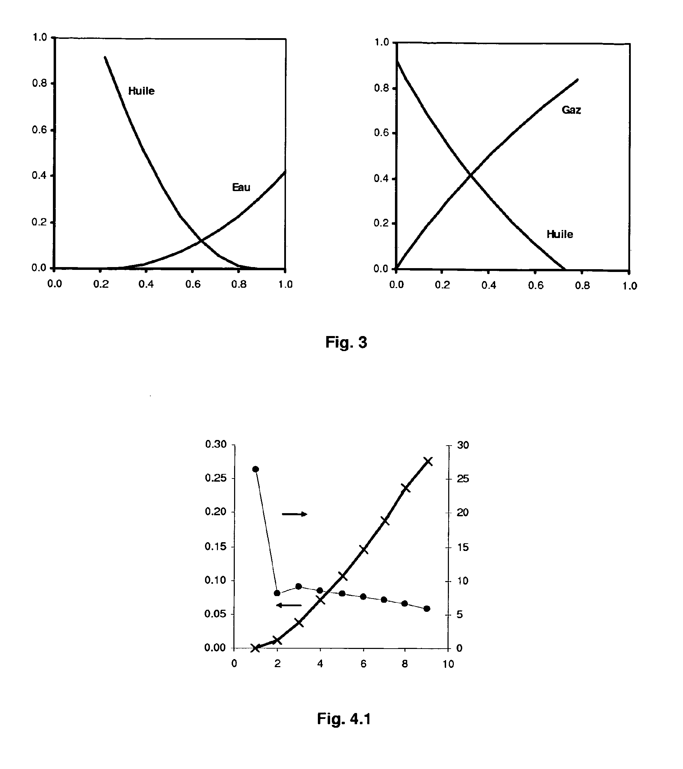

Le modèle de réservoir qui a été utilisé dans les simulations rapportées ici est une plan de coupe du réservoir maillé selon deux directions X et Z (Z : profondeur). Le réservoir est homogène, les propriétés sont données dans le tableau 7. La composition initiale du brut de réservoir est directement issue des mesures expérimentales effectuées sur les échantillons du gisement. Les autres propriétés sont des propriétés génériques et vraisemblables pour un sable bitumineux d'Athabasca exploité par un procédé SAGD. Les courbes de perméabilités relatives utilisées dans les simulations sont présentées Fig. 3. Le réservoir est exploité à l'aide de deux puits horizontaux, un producteur et un injecteur, percés perpendiculairement au plan de coupe. Une zone aquifère étant présente au bas du réservoir, le producteur se trouve à environ 8 m au-dessus du contact eau-huile, l'injecteur environ 5,5 m au-dessus du producteur. Après une période de préchauffage, de la vapeur d'eau saturée (qualité de 0.95) est injectée. Après environ 250 jours d'injection de vapeur, la pression d'injection est maintenue approximativement constante égale à 32.5 bar

| TABLEAU 7- CARACTERISTIQUES DU RESERVOIR | |
|---|---|
| Profondeur du toit, m | 300 |
| Dimensions totales dans les directions X, Y, Z, m | 100, 720, 58.5 |
| Épaisseur de la zone à huile et de la zone aquifère, m | 43.2, 15.3 |
| Perméabilité, horizontale, verticale, mD | 10 000, 3 500 |
| Porosité, fraction | 0.37 |
| Initial pressure @343.2 m, bar | 32.2 |
| Température initiale, °C | 17.0 |
| Densité de l'huile, API | 10 |
| Viscosité de l'huile, cp | 3.8E+06 |
| Saturation en eau initiale, fraction volume de pores | 0.22 |
| Composition initiale du brut, fraction molaire | |
| $H_2S$ | 0.00000 |
| SAT | 0.60752 |
| ARO | 0.14992 |
| RES1 | 0.04071 |
| RES2 | 0.14499 |
| ASP1 | 0.01871 |
| ASP2 | 0.03815 |

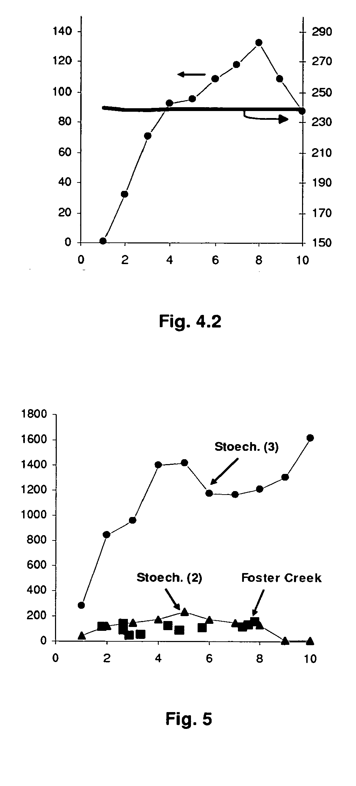

Une première simulation a été exécutée à l'aide de la stoechiométrie (3). La Fig. 4.1 présente les résultats de la simulation en fonction du temps de production d'huile cumulée, et le rapport des productions cumulées vapeur/huile. Le débit d'huile produite en conditions de surface et la température en fond du puits injecteur sont illustrés Fig. 4.2.

La production simulée d'$H_2S$, exprimée, comme il est d'usage dans les publications sur le sujet, en litres d'$H_2S$ par $m^3$ d'huile en surface, est présentée sur la Fig. 5, avec la production d'$H_2S$ déduite de mesures entre 2005 et 2012 sur le champ de Fisher Field publiées par les compagnies pétrolières Encana et Cenovus, sur le site web de l'Energy Resources Conservation Board (2012). Sur cette même figure, est représentée la production simulée d'$H_2S$ obtenue en utilisant dans la simulation la stoechiométrie (2), toutes choses égales par ailleurs.

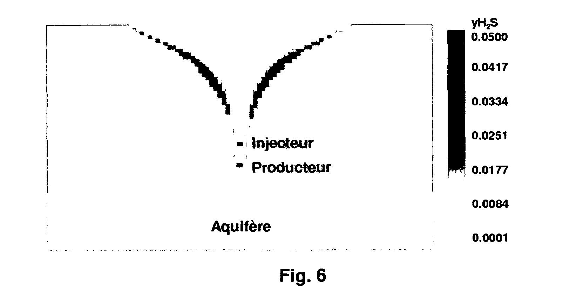

Une carte X-Z de la fraction molaire de l'$H_2S$ en phase gazeuse, après environ 4 ans de production est montrée Fig.6. Cette carte est issue des résultats de la simulation avec la stoechiométrie (2), mais le rendu qualitatif est à peu près le même avec la stoechiométrie (3) : les plus fortes concentrations d'$H_2S$ sont observées à la limite de la chambre de vapeur là où l'on trouve à la fois des températures élevées et des réactifs en abondance. Le comportement de la section conceptuelle modélisée, résultats aux puits et dans les mailles, est globalement conforme à l'attente.

Il peut être observé Fig. 5 que la production de $H_2S$ obtenue avec la stoechiométrie (2), - qui calait les résultats expérimentaux de l'évolution en fonction du temps des fractions SARA -, est beaucoup plus en accord avec les données champ que celle obtenue avec la stoechiométrie (3), - qui calait en plus la production expérimentale de $H_2S$ -.

On a par ailleurs effectué une étude de sensibilité à divers paramètres des simulations : taille des mailles, impact de la dissolution de l'$H_2S$ dans la phase aqueuse, thermodynamique par corrélation ou par équation d'état, modification des conditions de pression (initiale et d'injection) dans la gamme de 28 bars à 40 bars (pour cette gamme de pressions, la température d'injection varie dans la gamme de 230-250 °C ; en effet, la vapeur injectée étant de la vapeur saturée d'eau, on rappelle que la courbe de pression de saturation de l'eau en fonction de la température crée une relation biunivoque en pression d'injection et température d'injection). Dans tous les cas, les résultats obtenus, exprimés en litre de $H_2S$ par $m^3$ d'huile produite, sont similaires à ceux présentés Fig. 5, à savoir que les résultats obtenus avec la stoechiométrie (2) sont beaucoup plus en cohérence avec les données champ que ceux obtenus avec la stoechiométrie (3).

Dans les simulations qui ont été effectuées (cf. Fig. 4.2), de même que dans la réalité de l'exploitation de Fisher Field entre 2005 et 2012, période pendant laquelle les données champ ont été collectées, les conditions d'exploitation cherchent à maintenir le réservoir en température pour conserver la réduction de viscosité de l'huile liée à l'élévation de la température. Température et pression étant étroitement liées dans les procédés d'injection de vapeur saturée, le réservoir n'est ni dépressurisé ni refroidi comme c'est le cas du réacteur expérimental. Si de l'$H_2S$ généré par les réactions d'aquathermolyse est adsorbé sur des solides dans le réservoir, il n'y a pas de source particulière de désorption sans dépressurisation ou refroidissement du réservoir. Comme l'hypothèse d'un tel phénomène d'adsorption est plausible, on connaît une source de désaccord apparent entre les résultats expérimentaux d'aquathermolyse et les mesures sur champ, la stoechiométrie relative du soufre entre le solide et l'$H_2S$ pouvant être utilisée comme un paramètre d'ajustement de ce phénomène, tout en conservant les autres paramètres du modèle thermocinétique, paramètres calés uniquement sur l'évolution des fractions SARA.

La surface spécifique du coke, produit in situ par les réactions d'aquathermolyse n'étant pas connue, les valeurs des capacités d'adsorption de $H_2S$ issues de la littérature peuvent ne pas être pertinentes pour le coke généré in situ par aquathermolyse. Toutefois, tant que l'hypothèse, selon laquelle de l'$H_2S$ peut être piégé par adsorption dans le réservoir, tient, on peut considérer la production de $H_2S$ mesurée en laboratoire, modelé par la stoechiométrie (3), comme celle qui correspondrait à un maximum de désorption, tandis que la production de $H_2S$, modelée par la stoechiométrie (2), qui est de l'ordre de grandeur des données du champ, tiendrait compte de l'$H_2S$ piégé dans le réservoir par adsorption sur le coke. En tenant compte de la composition initiale de l'huile, en considérant que les réactions ont atteint l'équilibre final, et en imputant la différence entre la stoechiométrie (2) et (3) à un effet d'adsorption de l'$H_2S$ sur le COK, on peut calculer une capacité d'adsorption, que l'on estime ainsi à environ 0.09 gramme d'$H_2S$ par gramme du constituant COK pour des conditions de pression et température aux endroits de réactions d'environ 33 bar et 240 °C. Cette valeur n'est pas incohérente avec les valeurs de 2.9 gramme d'$H_2S$ par gramme de coke à 100 bars et 25°C de Li et coll. (2011), et de 0.02 g/g à pression atmosphérique et une température dans la gamme de 200-250 °C de Itaya et coll. (2011).

On constate que la méthodologie proposée pour construire un modèle thermo-cinétique utilisable en simulation de réservoir à partir de l'invention de Lamoureux-Var (2007) a permis d'obtenir, une fois le modèle thermo-cinétique introduit dans une simulation réservoir à l'échelle d'un champ, une production d'$H_2S$ en cohérence avec des données publiées avec des ajustements de paramètres beaucoup moins importants que ceux pratiqués par les procédés de l'art antérieur.

**Revendications**

**1.** Procédé d'exploitation d'un gisement souterrain d'hydrocarbures contenant des composés organo-soufrés, dans lequel

    i. on détermine une quantité d'hydrogène sulfuré ($H_2S$) produite par un phénomène d'aquathermolyse induit par un procédé thermique tel qu'une injection de vapeur dans ledit gisement, en mettant en oeuvre les étapes suivantes :

        - on décrit les hydrocarbures au moyen d'une représentation compositionnelle utilisant l'$H_2S$ et quatre fractions : les saturés, les aromatiques, les résines et les asphaltènes ;
        - on construit un modèle cinétique sur la base de ladite représentation compositionnelle, à partir d'un modèle élémentaire obtenu par bilan de matière sur l'élément soufre réparti au sein desdites fractions ;
        - on construit un modèle thermodynamique sur la base de ladite représentation compositionnelle ;
        - on détermine la quantité d'hydrogène sulfuré ($H_2S$) produite en réalisant une simulation de réservoir compositionnelle au moyen d'un simulateur thermique compositionnel et réactif, ledit simulateur mettant en oeuvre ledit modèle cinétique et ledit modèle thermodynamique ;

    ii. on détermine des conditions d'exploitation dudit gisement en fonction de ladite quantité d'hydrogène sulfuré ;
    iii. on produit lesdits hydrocarbures en appliquant lesdites conditions d'exploitation.

**2.** Procédé selon la revendication 1, dans lequel on construit le modèle cinétique en considérant que les réactants des réactions de génération d'$H_2S$ appartiennent aux classes des résines et des asphaltènes, et en considérant que les produits desdites réactions appartiennent à l'ensemble $H_2S$, saturés, aromatiques et un pseudo-constituant de type solide tel que le coke.

**3.** Procédé selon l'une des revendications précédentes, dans lequel ledit modèle cinétique comporte Nt constituants et Nr réactions, et l'on construit une matrice Nr x Nt de coefficients stoechiométriques des différentes réactions; lesdits coefficients stoechiométriques étant déterminés à partir d'un schéma réactionnel élémentaire obtenu par bilan matière sur l'élément soufre.

**4.** Procédé selon l'une des revendications précédentes, dans lequel on ajuste ledit modèle cinétique au moyen de simulation d'expériences d'aquathermolyse ou au moyen de simulation du comportement d'un champ soumis à un procédé thermique, champ pour lequel des mesures de production permettant de calculer une production d'$H_2S$ sont disponibles.

**5.** Procédé selon la revendication 4, dans lequel on ajuste ledit modèle cinétique en ajustant des constantes de temps pour restituer une décroissance des résines et des asphaltènes en fonction du temps, et/ou en ajustant la stoechiométrie relative entre les saturés et les aromatiques, et/ou en ajustant la stoechiométrie relative entre $H_2S$ et un pseudo-constituant de type solide tel que le coke.

6. Procédé selon l'une des revendications précédentes, dans lequel la représentation compositionnelle comporte :

- des pseudo-constituants pour représenter des phases fluides, et des phases appelées à se fluidifier, notamment par effet de température;
- au moins un pseudo-constituant de type solide (COK), tel que du coke ;
- au moins un constituant représentant l'eau.

7. Procédé selon l'une des revendications précédentes, dans lequel la fraction représentant les saturés représente, parmi les produits de réaction, l'unique fraction des composés non soufrés.

8. Procédé selon l'une des revendications précédentes, dans lequel on compare ladite quantité d'hydrogène sulfuré à une quantité passée mesurée, et l'on ajuste des paramètres dudit modèle cinétique et/ou dudit modèle thermique.

9. Procédé selon la revendication 8, dans lequel on prédit une production d'$H_2S$ par ledit gisement à partir desdits modèles ajustés.

10. Procédé selon l'une des revendications précédentes, dans lequel on détermine les conditions d'exploitation en adaptant des matériaux de complétion et/ou des dispositifs de traitement de gaz.

11. Procédé selon l'une des revendications précédentes, dans lequel on modifie les conditions d'exploitation en adaptant les conditions d'injection de la vapeur.

12. Procédé selon l'une des revendications précédentes, dans lequel on compare ladite quantité d'hydrogène sulfuré à une teneur maximale légale, et on détermine les conditions d'exploitation de façon à maintenir une production d'hydrogène sulfuré inférieure à ladite teneur maximale légale.


**Patentansprüche**

1. Verfahren zur Ausbeutung einer unterirdischen Lagerstätte von Kohlenwasserstoffen, die schwefelorganische Verbindungen enthalten, wobei

i. eine Menge an Schwefelwasserstoff ($H_2S$) bestimmt wird, die mittels eines Phänomens der wässrigen Thermolyse erzeugt wird, welches durch ein thermisches Verfahren bewirkt wird, wie etwa durch ein Injizieren von Dampf in die Lagerstätte, wobei die folgenden Schritte durchgeführt werden:

- die Kohlenwasserstoffe werden mittels einer zusammensetzungsbezogenen Darstellung beschrieben, wobei $H_2S$ und vier Fraktionen verwendet werden: die gesättigten Stoffe, die Aromaten, die Harze und die Asphaltene;
- auf Grundlage der zusammensetzungsbezogenen Darstellung wird, ausgehend von einem Elementarmodell, das mittels einer stofflichen Bilanz der Verteilung des Elements Schwefel auf die Fraktionen erhalten wurde, ein kinetisches Modell erstellt;
- auf Grundlage der zusammensetzungsbezogenen Darstellung wird ein thermodynamisches Modell erstellt;
- es wird die erzeugte Menge an Schwefelwasserstoff ($H_2S$) bestimmt, indem mittels eines thermischen Simulators, der die Zusammensetzung sowie Reaktionsvorgänge erfasst, eine Simulation der Zusammensetzung des Reservoirs durchgeführt wird, wobei der Simulator das kinetische Modell und das thermodynamische Modell zur Anwendung bringt;

ii. in Abhängigkeit von der Menge an Schwefelwasserstoff werden die Ausbeutungsbedingungen der Lagerstätte festgelegt;
iii. die Kohlenwasserstoffe werden unter Anwendung der Ausbeutungsbedingungen gefördert.

2. Verfahren nach Anspruch 1, in welchem das kinetische Modell erstellt wird, wobei davon ausgegangen wird, dass die Edukte der Reaktionen zur Erzeugung von $H_2S$ den Klassen der Harze und der Asphaltene angehören, und wobei davon ausgegangen wird, dass die Produkte dieser Reaktionen der Gesamtheit angehören, die von $H_2S$, gesättigten Stoffen, Aromaten und einem Pseudobestandteil feststofflicher Art wie etwa Koks gebildet wird.

3.  Verfahren nach einem der vorhergehenden Ansprüche, wobei das kinetische Modell Nt Bestandteile und Nr Reaktionen aufweist, und wobei eine Matrix Nr x Nt aus stöchiometrischen Koeffizienten der verschiedenen Reaktionen erstellt wird; wobei die stöchiometrischen Koeffizienten ausgehend von einem elementaren Reaktionsschema bestimmt werden, das mittels einer stofflichen Bilanz bezüglich des Elements Schwefel erhalten wurde.

4.  Verfahren nach einem der vorhergehenden Ansprüche, wobei das kinetische Modell angepasst wird, indem Versuche der wässrigen Thermolyse simuliert werden oder indem das Verhalten eines Feldes simuliert wird, welches einem thermischen Verfahren ausgesetzt ist, wobei für dieses Feld förderungsbezogene Messwerte verfügbar sind, die es ermöglichen, eine $H_2S$-Erzeugung zu berechnen.

5.  Verfahren nach Anspruch 4, wobei das kinetische Modell angepasst wird, indem Zeitkonstanten derart angepasst werden, um eine Abnahme der Harze und Asphaltene in Abhängigkeit von der Zeit wiederzugeben, und/oder indem die relative Stöchiometrie zwischen den gesättigten Stoffen und den Aromaten angepasst wird und/oder indem die relative Stöchiometrie zwischen dem $H_2S$ und einem Pseudobestandteil feststofflicher Art wie etwa Koks angepasst wird.

6.  Verfahren nach einem der vorhergehenden Ansprüche, wobei die zusammensetzungsbezogene Darstellung Folgendes aufweist:

    - Pseudobestandteile, um fließfähige Phasen darzustellen, sowie Phasen, die insbesondere unter Temperatureinwirkung in den fließfähigen Zustand übergehen werden;
    - mindestens einen Pseudobestandteil feststofflicher Art (COK), wie etwa Koks;
    - mindestens einen Bestandteil, der Wasser darstellt.

7.  Verfahren nach einem der vorhergehenden Ansprüche, wobei die Fraktion, welche die gesättigten Stoffe darstellt, unter den Reaktionsprodukten die einzige Fraktion der nicht-schwefelhaltigen Verbindungen darstellt.

8.  Verfahren nach einem der vorhergehenden Ansprüche, wobei die Menge an Schwefelwasserstoff mit einer Menge verglichen wird, die in der Vergangenheit gemessen wurde, und die Parameter des kinetischen Modells und/oder des thermischen Modells angepasst werden.

9.  Verfahren nach Anspruch 8, wobei eine Erzeugung von $H_2S$ durch die Lagerstätte ausgehend von den angepassten Modellen vorhergesagt wird.

10. Verfahren nach einem der vorhergehenden Ansprüche, wobei die Ausbeutungsbedingungen festgelegt werden, indem Komplettierungsmaterial und/oder Gasbehandlungsvorrichtungen angepasst werden.

11. Verfahren nach einem der vorhergehenden Ansprüche, wobei die Ausbeutungsbedingungen modifiziert werden, indem die Injektionsbedingungen des Dampfes angepasst werden.

12. Verfahren nach einem der vorhergehenden Ansprüche, wobei die Menge an Schwefelwasserstoff mit einem gesetzlichen Höchstgehalt verglichen wird, und die Ausbeutungsbedingungen derart festgelegt werden, dass eine Schwefelwasserstofferzeugung geringer als der gesetzliche Höchstgehalt bleibt.

## Claims

1.  A method of developing an underground reservoir of hydrocarbons containing organosulfur compounds, wherein:

    i. an amount of hydrogen sulfide ($H_2S$) produced by an aquathermolysis phenomenon induced by a thermal process such as steam injection into said reservoir is determined by carrying out the hollowing stages:

        - describing the hydrocarbons by means of a compositional representation using $H_2S$ and four fractions: saturates, aromatics, resins and asphaltenes;

- constructing a kinetic model on the basis of said compositional representation, from an elementary model obtained by mass balance for the element sulfur distributed within said fractions;
- constructing a thermodynamic model on the basis of said compositional representation;
- determining the amount of hydrogen sulfide ($H_2S$) produced by performing a compositional reservoir simulation by means of a compositional and reactive thermal simulator, said simulator using said kinetic model and said thermodynamic model;

ii. development conditions are determined for said reservoir as a function of said amount of hydrogen sulfide;
iii. said hydrocarbons are produced by applying said development conditions.

2. A method as claimed in claim 1, wherein the kinetic model is constructed considering that the reactants of the $H_2S$ generation reactions belong to the classes of resins and asphaltenes, and considering that the products of said reactions belong to the set made up of $H_2S$, saturates, aromatics, and a pseudoconstituent of solid type such as coke.

3. A method as claimed in any one of the previous claims, wherein said kinetic model comprises Nt constituents and Nr reactions, and a matrix Nr x Nt of stoichiometric coefficients of the various reactions is constructed, said stoichiometric coefficients being determined from an elementary reaction scheme obtained by mass balance for the element sulfur.

4. A method as claimed in any one of the previous claims, wherein said kinetic model is adjusted by simulating aquathermolysis experiments or by simulating the behaviour of a field subjected to a thermal process, a field for which production measurements allowing $H_2S$ production to be calculated are available.

5. A method as claimed in claim 4, wherein said kinetic model is adjusted by adjusting time constants so as to restore a decrease in the resins and asphaltenes as a function of time, and/or by adjusting the relative stoichiometry between saturates and aromatics, and/or by adjusting the relative stoichiometry between $H_2S$ and a pseudoconstituent of solid type such as coke.

6. A method as claimed in any one of the previous claims, wherein the compositional representation comprises:

- pseudoconstituents for representing fluid phases and phases likely to be fluidized, notably through the effect of temperature,
- at least one pseudoconstituent of solid type (COK), such as coke,
- at least one constituent representing water.

7. A method as claimed in any one of the previous claims, wherein the fraction representing the saturates represents, among the reaction products, the only fraction of the non-sulfur compounds.

8. A method as claimed in any one of the previous claims, wherein said amount of hydrogen sulfide is compared with a previously measured amount, and parameters of said kinetic model and/or of said thermal model are adjusted.

9. A method as claimed in claim 8, wherein $H_2S$ production by said reservoir is predicted from said adjusted models.

10. A method as claimed in any one of the previous claims, wherein the development conditions are determined by adapting completion materials and/or gas treatment devices.

11. A method as claimed in any one of the previous claims, wherein the development conditions are modified by adapting the steam injection conditions.

12. A method as claimed in any one of the previous claims, wherein said amount of hydrogen sulfide is compared with a maximum legal content, and the development conditions are determined so as to keep hydrogen sulfide production below said maximum legal content.

**Fig. 1**

**Fig. 2.1**

Fig. 2.2

Fig. 3

Fig. 4.1

Fig. 4.2

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2892817

**Littérature non-brevet citée dans la description**

- 2nd Int. Conf., The Future of Heavy Crude and Tar Sands. **HYNE J.B.** Aquathermolysis of heavy oils. McGraw Hill, 1984, 404-411
- **F.LEYSSALE.** Étude de la pyrolyse d'alkylpolyaromatiques appliquée aux procédés de conversion des produits lourds du pétrole. Influence du noyau aromatique sur le comportement thermique. *Thèse,* 1991
- **PENG, D. Y. ; ROBINSON, D. B.** A New Two-Constant Equation of State. *Industrial and Engineering Chemistry Fundamentals,* 1976, vol. 15, 59-64
- **PENG, D. Y. ; ROBINSON, D. B.** The Characterization of the Heptanes and Heavier Fractions for the GPA Peng-Robinson Programs. Gas Processors Association. *Research Report 28, Tulsa,* 1978
- **SØREIDE, I. ; WHITSON, C. H.** Peng-Robinson Prédictions for Hydrocarbons CO2, N2, and H2S with Pure Water and NaCl Brine. *Fluid Phase Equilibria,* 1992, vol. 77, 217-240
- **BODUSZYNSKI, M.M.** Composition of Heavy Petroleums. 1. Molecular Weight, Hydrogen Deficiency, and Heteroatom Concentration as a Function of Atmospheric Equivalent Boiling Point up to 1400 °F (760 °C). *Energy & Fuels,* 1987, vol. 1, 2-11

- **MERDRIGNAC, I. ; ESPINAT D.** Physicochemical Characterization of Petroleum Fractions: the State of the Art. *Oil & Gas Science and Technology - Rev. IFP,* 2007, vol. 62 (1), 7-32
- **CROOKSTON, R. B. ; CULHAM, W. E. ; CHEN, W. H.** A Numerical Simulation Model Recovery Processes for Thermal Recovery Processes. *SPE 6724, SPE J.,* Février 1979, 37-58
- **SOUAHI, F. ; KAABECHE, H.** Developing Correlations for Prédiction of Petroleum Fraction Properties using Genetic Algorithms. *OGST,* Avril 2008, vol. 63 (2), 229-237
- **STAMATAKI, S. ; MAGOULAS, K.** Prediction of Phase Equilibria and Volumetric Behavior of Fluids with High Concentration of Hydrogen Sulfide. *Oil & Gas Science and Technology - Rev. IFP,* 2000, vol. 55 (5), 511-522
- **LORIA, H ; PEREIRA-ALMAO, P. ; SATYRO, M.** Prédiction of Density and Viscosity of Bitumen Using the Peng-Robinson Equation of State. *Ind. Eng. Chem. Res.,* 2009, vol. 48, 10129-10135
- **DADGOSTAR, N. ; SHAW, J.M.** A Predictive Correlation for the Constant-Pressure Specific Heat Capacity of Pure and Ill-Defined Liquid Hydrocarbons. *Fluid Phase Equilibria,* 2012, vol. 313, 211-226